# EUROPEAN PATENT SPECIFICATION

(11) **EP 0 248 433 B1**
(45) Date of publication and mention of the grant of the patent: **15.03.1995**
(21) Application number: 87108110.5
(22) Date of filing: 04.06.1987
(51) Int. Cl.: C25B 9/00, C25B 13/00, C25B 11/03

(54) **Electrolytic cell**
Elektrolysezelle
Cellule d'électrolyse

(30) Priority: 04.06.1986 US 870474
(43) Date of publication of application: 09.12.1987
(73) Proprietor: H-D TECH INC., Sarnia, Ontario N7T 7K7 (CA)
(72) Inventor: Mathur, Indresh, Sarnia Ontario (CA); Bissett, David, Bright's Grove Ontario (CA); James, Allan, Wallaceburg Ontario (CA)
(74) Representative: Huber, Bernhard, Dipl.-Chem.

(56) References cited:
- EP-A- 0 066 938
- EP-A- 0 086 896
- EP-A- 0 088 461
- EP-A- 0 216 428
- US-A- 4 118 305

## Description

This invention relates to electrochemical cells which employ porous, self-draining electrodes and liquid permeable diaphragms.

Packed bed chlor-alkali electrolytic cells are known from Oloman et al. U.S. Patent No. 3,969,201 and U.S. Patent No. 4,118,305. Improvements in these cells have been disclosed by McIntyre et al. in U.S. Patent Nos. 4,406,758; U.S. 4,431,494; U.S. 4,445,986; U.S. 4,511,441; and U.S. 4,457,953. These packed bed electrolytic cells are particularly useful for the production of alkaline solutions of hydrogen peroxide.

In Grangaard, U.S. Patent Nos. 3,607,687; U.S. 3,462,351; U.S. 3,507,769; and U.S. 3,592,749 there are disclosed electrolytic cells for the production of hydrogen peroxide in which the peroxide is produced in the cathode compartment of the cell which contains a depolarized cathode utilizing an oxygen containing gas. The electrochemical cells of Oloman et al. and McIntyre et al. disclosed in the patents cited above, are improvements over the cells of Grangaard partly as the result of the use of the novel electrode material disclosed in U.S. Patent No. 4,457,953 in which there is disclosed a method for the production of coated particles for use in a packed bed electrode of an electrochemical cell.

It has been found that a packed bed, self-draining cathode for maximum productivity within an electrochemical cell for the production of an alkaline hydrogen peroxide solution must be supplied with a liquid anolyte through a porous diaphragm at a substantially uniform rate of flow across the porous diaphragm without appreciable variation of the flow rate as a function of the head of the electrolyte. Prior art porous diaphragms for packed bed electrolytic cells have permitted a considerable variation in flow rate with the flow rate at the base of the cell (exposed to the full head of the electrolyte) being appreciably faster than the flow rate in the center of the cell or at the top of the cell, where a decreased head pressure is exerted on the diaphragm. This variation in flow rate has resulted in inefficiency of the cell. Where an attempt has been made to reduce the flow rate through the diaphragm, it has been found that too little electrolyte passes through the diaphragm into the cathode where the diaphragm is exposed to a minimal head of electrolyte. An insufficient amount of electrolyte passing through the diaphragm into the cathode also results in an increase in cell voltage. An excessive amount of electrolyte passing through the diaphragm causes flooding of the cathode and consequent reduction in the depolarizing effect of the oxygen containing gas fed to the side of the cathode opposite to that which is exposed to the electrolyte.

EP-A-0086461 discloses an electrode for the production of gas, e.g. chlorine and hydrogen, by electrolysis, and an electrolytic cell comprising a selective-permeable membrane; the electrolytic cell comprises electrode/cell assemblies in frames.

The present invention generally resides in an electrochemical cell having a porous, self-draining, gas diffusion electrode. The cell can be arranged in a filter press type configuration and in a monopolar or bipolar mode of operation. A more uniform rate of electrolyte flow into the electrode is obtained by utilizing a multiplicity of individual cell units which are independent of each other and stacked vertically as well as horizontally. The height of each cell unit can be predetermined to provide a more uniform rate of electrolyte flow, extending from top to bottom, across a diaphragm and into the electrode. The substantially uniform electrolyte flow that is essential to the efficient operation of a self-draining electrode is therefore assured simply by controlling the height of the individual cell units of the invention.

Subject matter of the present invention is an electrode assembly according to claim 1 exhibiting improved electrolyte flow through a diaphragm thereof with a low voltage penalty when used in an electrochemical cell for reacting an electrolyte with a gas.

Preferred embodiments thereof are subject matter of claims 2 to 8.

Further subject matter of the present invention is an electrochemical cell for reacting an electrolyte with a gas according to claim 9. A preferred embodiment thereof is subject matter of claim 10.

The invention, more particularly, resides in an electrode assembly exhibiting improved electrolyte flow through a diaphragm thereof with a low voltage penalty when used in an electrochemical cell (5) for reacting an electrolyte with a gas, said assembly comprising a porous self-draining cathode (14) in contact with one planar surface of a current collector (12), a liquid permeable diaphragm (16) positioned in contact with an opposite planar surface of said porous cathode (14), and an anode (20) positioned in a spaced relationship to the diaphragm (16) by an electrically nonconductive spacing means (18), the spacing means (18) being of a dimension sufficient to allow for effective circulation of said electrolyte between said diaphragm (16) and said anode (20), characterized in that said liquid permeable diaphragm (16) comprises (A) a plurality of layers of a microporous polyolefin film, or (B) at least one layer of a composite comprising said microporous polyolefin film and a support fabric resistant to degradation upon exposure to an electrolyte or electrolysis products thereof.

The current distributor and anode may be constructed of a unitary sheet element to form an anode/current collector or distributor combination in which the anode portion has an opposite polarity from the current collector. It is also apparent that the porous cathode and the current collector can be combined.

The diaphragm is in contact with or supports the porous cathode. Better flow of electrolyte through the porous cathode is obtained, with an unexpectedly low voltage penalty, by contact of the current distributor with the cathode on the gas diffusion face thereof.

The invention also resides in the claimed electrode assembly for an electrolytic cell having a frame said frame comprising at least one rectangularly shaped frame comprising parallel top and bottom frame members of predetermined length and divided by at least one frame member parallel to said top and bottom members so as to define a plurality of openings suitable for retaining said electrode assembly in each of said openings extending in a generally vertical direction with respect to said opening.

The invention further resides in an electrolytic cell for reacting an electrolyte with a gas, comprising an electrode assembly exhibiting improved electrolyte flow through a diaphragm thereof with a low voltage penalty, comprising an anode (20), a liquid permeable diaphragm (16), a porous self-draining cathode (14), a cathode current collector (12), and an electrically nonconductive spacing means (18), wherein said current collector (12) is in contact with on planar surface of said porous cathode (14), said diaphragm (16) is in contact with an opposite surface of said porous cathode (14), and wherein said diaphragm (16) is positioned in a spaced relationship with said anode (20) by said spacing means (18), said spacing means (18) being of a dimension sufficient to allow for effective circulation of said electrolyte between said diaphragm (16) and said anode (20), said diaphragm (16) comprising (A) a plurality of layers of a microporous polyolefin film, or (B) at least one layer of a composite comprising said microporous polyolefin film and a support fabric resistant to degradation upon exposure to an electrolyte or electrolysis products thereof.

Fig. 1 is an exploded view of a schematic representation of one embodiment of the electrochemical cell of the invention wherein a pair of frames are shown each having two openings adapted for placement of the components of a pair of electrode assemblies.

Fig. 2 is a schematic representation of a cross sectional side view of one embodiment of an electrochemical cell of the invention in which each of the frame components has two openings adapted for placement of the components of the pair of electrode assemblies.

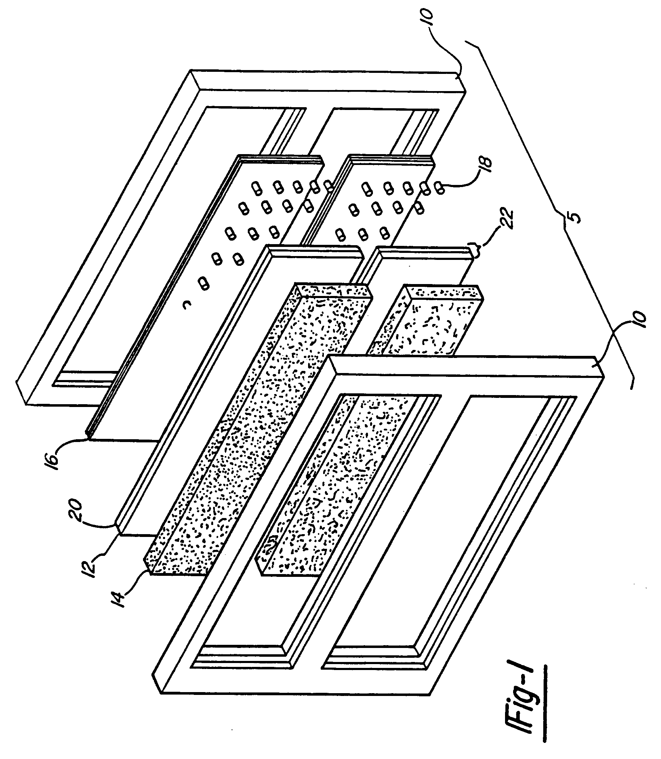

In one embodiment of the invention illustrated in Fig. 1, there is shown schematically an electrolytic cell 5 according to the invention. Each cell contains a frame 10, a multiple layered, liquid permeable diaphragm 16, a non-conductive spacing means 18, an electrode 22 consisting of an anode portion 20, and a current collector portion 12, and a porous, self-draining cathode 14. Although the drawings show the anode portion 20 and the current collector portion 12 as separate elements, it is preferred that these portions be formed as a single, unitary component. The electrical connections for the cell electrodes and the means for distribution of electrolyte and removal of products of electrolysis are not shown.

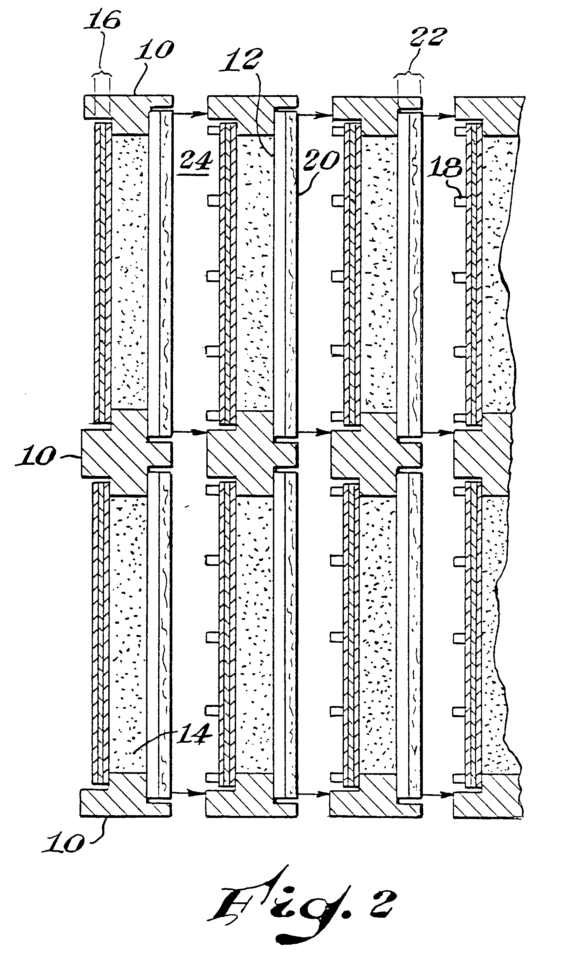

In Fig. 2, there is shown schematically and partially exploded, a side sectional view of a series of electrolytic cells, each containing a plurality of electrode assemblies corresponding to the 2-cell embodiment shown in Fig. 1. Corresponding components are numbered as in Fig. 1. Each cell has a frame 10 which can accommodate two electrolytic cells or electrode assemblies stacked vertically. It will be understood by those skilled in the art that additional cells can be stacked vertically simply by utilizing a frame having the required number of openings suitable for holding the components of each cell. Alternatively, the bipolar cell of the invention can be used in a stacked arrangement of single cell frames having individual cells rather than cell frames containing a plurality of cells or electrode assemblies.

In operation, the liquid electrolyte, i.e. the anolyte, passes by gravity feed from the anolyte compartment 24 of the cell through the liquid permeable diaphragm to the porous, self-draining cathode. The anolyte flow across the diaphragm is relatively uniform as the result of the use of multiple layers of the diaphragm as well as the design of the cell so as to restrict the height of each individual cell to less than about 60 cm, preferably about 30 cm. The cathode is in contact with the current collector portion 12. During operation of the cell a gas is fed to the non-electrolyte active portion of the cathode 14 and an aqueous product is removed from the cathode 14. The anode portion 20 of the bipolar electrode 22 is separated from the diaphragm 16 by spacing means 18 thereby forming an anolyte compartment 24. The spacing means are shown as a plurality of discs or rods of a predetermined thickness or length sufficient to provide for a space between the diaphragm and the bipolar electrode 22 to allow for circulation of the electrolyte, i.e. a mixture of oxygen and caustic, i.e. an alkali metal hydroxide. Preferably, the spacing means are flat discs which are positioned at equal spaced distances from each other. The discs can be loosely placed on the diaphragm as the cell elements are assembled in a horizontal position. When the cell is assembled and placed in the frame , sufficient pressure is exerted upon the cell elements to hold the spacers in position between the diaphragm and the anode. Alternatively, the spacers can be attached by any convenient means, such as an adhesive to the diaphragm surface or the electrode surface.

The spacers are made of a material that is resistant to the electrolyte and the products of electrolysis. Thus, the spacers can be made of a metal or metal alloy, or a synthetic resinous material. Preferably, the spacers are made of a synthetic resinous material and have a diameter of about 6 mm and a length or thickness of about 3 mm. Obviously, the spacers can be circular in shape or of any other convenient geometric shape, i.e. square; rectangular; triangular; star-shaped; or the like. The only critical feature of the spacers being that the dimensions are chosen to provide sufficient spacing for the circulation of the electrolyte between the diaphragm and the electrode. It is also within, the ambit of the present invention to include spacers made of a sheet material such as a perforated screen, a woven or non-woven mat of a fibrous material ; a ribbed sheet, a demister, or the like.

The placement of multiple cells in a vertically stacked position, and with the individual cells isolated from each other vertically, minimizes the unevenness of electrolyte flow within each cell from the top to the bottom and through the diaphragm into the porous cathode. By limiting the height of the individual cell, uneven electrolyte flow and current distribution caused by such unevenness of electrolyte flow is minimized. It is thus possible to operate the cell at increased efficiency and to extend the life of the electrode as the result of increasing the flow of electrolyte into the cathode at the upper portion thereof and reducing the flooding of the cathode at the lower portion thereof.

There are several problems relating to the use of porous, self-draining cathodes that tend to prevent their exploitation in commercial processes. One of these problems is the difficulty of providing a substantially uniform flow of electrolyte from one cell compartment through the diaphragm to the porous cathode over the entire range of practical electrolyte head levels. In electrolytic cells, for the production of an alkaline hydrogen peroxide solution, having packed bed, self-draining cathodes, operating at atmospheric pressure, and an anolyte head of from 60 to 180 cm or more, the unevenness of flow of anolyte through the diaphragm to the cathode is readily apparent. At the lower portion of the cathode, which is exposed to the full height of the anolyte liquid head, flooding of a portion of the cathode can occur resulting in inactivation of the flooded portion of the cathode. At the same time, at the upper portion of the cathode, which is exposed to only a small fraction of the anolyte liquid head, the cathode is subjected to an insufficient flow of anolyte resulting in an insufficient wetting of the cathode which causes an increase in cell voltage.

In order to avoid flooding of the porous cathode, the prior art has suggested the use of special waterproofed cathodes and/or attempted to balance the anolyte pressure with the gas pressure across the cathode. One method of controlling the flow through the diaphragm is to operate the anolyte compartment under either gas or liquid pressure. In this method the anolyte chamber of the cell is sealed from the atmosphere and gas pressure or liquid pressure is exerted upon the anolyte. High pressure pumps can be used to force a pressurized liquid anolyte into the opposing catholyte compartment or a pressurized gas can be fed to the anolyte compartment. Alternatively, the pressure drop across the diaphragm can be regulated by pulling a vacuum on the cathode side of the diaphragm. This will pull the electrolyte toward and through the diaphragm into the cathode. These methods have not proven commercially acceptable.

An electrolytic cell utilizing at least one self-draining cathode can be used in the production of chlorine and alkali metal hydroxide, but is particularly useful in the product of hydrogen peroxide. Where a self-draining cathode is utilized for the electrolysis of, for example, sodium chloride, chlorine is produced in the anolyte compartment of the cell and aqueous sodium hydroxide is produced in the catholyte compartment of the cell. Hydrogen, which would normally be produced at the cathode is not produced when an oxygen containing depolarizing gas is fed to a porous, self draining, gas diffusion cathode, thus effecting a saving in cell voltage. In the prior art, one type of cathode developed for utilization of oxygen as a depolarizing as is characterized by a structure composed of a thin sandwich of a microporous layer of plastic film combined with a catalyzed layer which is wet-proofed with a fluorocarbon polymer. Such gas depolarized cathodes generally are in contact, on the electrolyte active face of the cathode, with a wire screen termed a "current collector". Current is thereby distributed to the catalyzed layer of the cathode and an oxygen containing gas can be fed into the catalyzed layer of the cathode through a microporous backing layer on said cathode. Such cathodes have suffered from various deficiencies including delamination of the various layers during operation of the cell and the ultimate flooding by electrolyte of the catalyzed layer leading to inactivation of the cathode and shut down of the cell. The self-draining cathode described above is an improved form of gas depolarized cathode for use in the production of an alkaline hydrogen peroxide solution or a halogen such as chlorine and an alkali metal hydroxide solution.

Electrolytic cells for the reduction of oxygen to peroxide have also been described in the prior art as utilizing one side of a porous carbon plate in contact with the electrolyte and an oxygen containing gas delivered to the opposite side of the plate for reaction within the plate. These porous gas diffusion electrodes require careful balancing of oxygen and electrolyte pressure to keep the reaction zone confined evenly just below or on the surface of the porous plate. The packed bed, self-draining cathode described in U.S. Patent No. 4,118,305 is an improved form of electrode as compared to the above described porous carbon plate.

In one embodiment of the electrochemical cell of the invention, a diaphragm is used which is composed of one or more layers of a liquid permeable material. In addition, the cell design provides for the control over the height of the individual cells by the use of a frame which can accommodate a plurality of vertically stacked cells forming an integral unit and in which the frame can also accommodate a plurality of cells which are arranged in the usual horizontal direction, characteristic of filter press type bipolar electrochemical cells. Alternatively, individual framed cells can be stacked vertically to accomplish similar objectives. In the production of chlorine and caustic or in the production of an alkaline aqueous solution of hydrogen peroxide by electrolysis, the porous, self-draining cathode is supplied with an oxygen containing gas on the side of the cathode which is inactive with respect to reaction with electrolyte.

In the following description, an electrochemical reaction for the production of an alkaline hydrogen peroxide solution is described as a representative electrochemical process utilizing the electrochemical cell of the invention. The process is conducted by electrolyzing an aqueous solution comprising an alkali metal hydroxide as electrolyte. The cell is divided by a liquid permeable diaphragm into catholyte and anolyte compartments containing, respectively, a cathode and an anode. An aqueous solution of hydrogen peroxide and an alkali metal hydroxide is recovered as the product of hydrolysis from the catholyte compartment. An oxygen containing gas, such as air, is simultaneously flowed into at least a portion of the porous, self-draining electrode which acts as a cathode. Electrolyte is simultaneously controllably flowed from the anolyte compartment of the cell into the cathode through the permeable diaphragm at a flow rate about equal to the drainage rate of the cathode. The flow rate through the diaphragm is determined by the differential pressure on the diaphragm. On the cathode side of the diaphragm, the pressure may be at atmospheric pressure or above as the result of flowing a gas under pressure into the porous cathode. The pressure on the anode side of the diaphragm can be adjusted by changing the head of electrolyte in the anolyte compartment. The head of anolyte is specified herein as the total head, as measured from the bottom of the diaphragm to the top surface of the anolyte. Thus, the effective pressure which causes the flow of anolyte through the diaphragm is the head pressure of the anolyte minus the pressure exerted on the catholyte side of the diaphragm by the gas which is fed into the cathode of the cell.

The porous cathode generally has a thickness of from 0.1 to 2.0 cm in the direction of current flow and can comprise a fixed bed (sintered) porous matrix as well as a bed of loose particles, having pores of sufficient size and number to allow both gas and liquid to flow therethrough. The cathode generally contains a conductive material which may also be a good electrocatalyst for the reaction to be carried out. In the reduction of oxygen to hydrogen peroxide, graphite particles coated with carbon and polytetrafluoroethylene as a binder have been found to be suitable for forming the cathode mass because the graphite substrate is cheap, conductive, and requires no special treatment. For other reactions, uncoated graphite or other forms of carbon or tungsten carbide substrates can be used, as well as certain metals such as platinum, iridium, or metal oxides such as lead dioxide or manganese dioxide coated on a conducting or non-conducting substrate. The graphite particles typically have diameters in the range of from 0.005 to 0.5 cm and have a minimum diameter of from 30 to 50 »m (microns). It is the bed of particles which acts as the cathode.

Generally, the porous cathode is supplied with current through a current collector which can be a metal mesh or metal sheet, generally made of any electrically conductive metal, but preferably nickel. The current collector contacts the cathode on the face which is opposite to the face which is in contact with the diaphragm. The cathode is also supplied with an oxygen containing gas so as to depolarize the cathode during operation of the cell and to prevent the formation of hydrogen at the cathode during the electrolysis. It was found that there is considerably less voltage penalty in placing the current collector on the back face of the cathode, and that improved flow into the cathode is obtained. Any channelling tendency along the planar face of the current collector and the diaphragm is avoided. Such channelling prevents proper contact between the electrolyte solution and the particles in the bed when the current collector positioned on the electrolyte active face of the cathode. Accordingly, better electrolyte flow into the cathode is obtained when the current collector is placed on the side of the cathode opposite from the diaphragm, instead of between the diaphragm and the cathode. Additionally, an increase in gas/liquid contact is obtained.

Generally, the diaphragm is positioned so as to support the electrolyte active face of the cathode. The diaphragm can also be indirectly as well as directly supported on one side by the cathode. The diaphragm comprises an assembly of multiple layers of a microporous polyolefin film or a composite comprising an electrolyte resistant support fabric and the microporous polyolefin film. The support fabric can be laminated to the film and can be a woven or non-woven material, selected from , for example,asbestos, or a synthetic resinous material No necessity exists for holding together the multiple layers of the diaphragm. At the peripheral portions thereof, as is conventional, the diaphragm is adhered to the frame members of the cell, which can comprise a plurality of layers, i.e. multiple diaphragm layers or variable layers. Multiple diaphragm layers of two to five layers of film or composite diaphragm have been found useful in reducing excessive variation in flow of electrolyte through the diaphragm over the usual and practical range of electrolyte head. Portions of the multiple layered diaphragm which are exposed to the full head of electrolyte, as compared with portions of the diaphragm which are exposed to little or no electrolyte head, pass substantially the same amount of electrolyte to the cathode.

As an alternative means of producing a useful diaphragm, it has been found desirable to prepare a diaphragm having variable layers of the porous film or composite diaphragm. Thus it is suitable to utilize one to two layers of the porous film or composite diaphragm in areas of the cell which are exposed to relatively low pressure as the result of being positioned close to the top surface of the electrolyte while utilizing two to six layers of the film or composite diaphragm in areas of the diaphragm exposed to moderate or high pressure of the electrolyte. A preferred construction is a two layered film or composite on the top portion of the diaphragm and a three layered film or composite on the bottom portion of the diaphragm.

The film or composite diaphragm is characterized as hydrophilic. In a 25 »m (micron) thickness, the film portion of the composite has a porosity of from 38% to 45%, and an effective pore size of from 0.02 to 0.04 »m (micrometers). A typical composite diaphragm consists of a 25 »m (micron) thick microporous polyolefin film laminated to a non-woven polypropylene fabric with a total thickness of about 125 »m (microns). Such porous material composites are available under the trade designation CELGARD® from Celanese Corporation.

Self-draining, packed bed cathodes disclosed in the prior art are typically composed of graphite particles, however other forms of carbon can be used as well as certain metals. The cathode typically has a plurality of interconnecting passageways having average diameters sufficiently large so as to make the cathodes self-draining, that is the effects of gravity are greater than the effects of capillary pressure on an electrolyte present within the passageways. The diameter actually required depends upon the surface tension, the viscosity, and other physical characteristics of the electrolyte present within the packed bed cathode. Generally the passageways have a minimum diameter of from 30 to 50 »m (microns), but the maximum diameter is not critical. The cathode should not be so thick as to unduly increase the resistance losses of the cell. A suitable thickness for a cathode has been found to be from 0.075 to 2.5 cm, preferably from 0.15 to 1.25 cm. Generally the cathode is prepared from such materials as graphite, steel, iron, and nickel. Glass, various plastics, and various ceramics can be used in admixture with conductive materials. The individual particles can be supported by a non-electrically conductive screen or other suitable support, or the particles can be sintered or otherwise bonded together. An improved material useful in the formation of a packed bed cathode is disclosed in for example, U.S. Patent No. 4,457,953.

The anode of the electrochemical cell of the invention can be a dimensionally stable anode such as those conventionally used in electrolytic cells for the production of chlorine and caustic. In an electrolytic cell for the production of hydrogen peroxide, the anode can be stainless steel but is preferably an insoluble electrode prepared by coating an electrically conductive metal substrate such as nickel or a nickel plated substrate with an effective electrocatalytic amount of cobalt and tungsten compounds, such as the nitrates and chlorides.

The frame component of the cell of the invention can be constructed of metal, a synthetic resinous material, or a combination of such materials. For example, the frame may be molded from hard rubber, filled polypropylene, polyester-fiberglass, polyester or any other material that is chemically resistant to the cell environment. Generally, the anode frame is formed of these plastic materials while the cathode frame is formed from steel.

Present day electrolytic cells also employ metal frames which provide advantages in high strength, small cross-sectional area in the structural members, corrosion resistance, resistance to warping and compatibility with respect to coefficient of expansion with metal electrode surfaces.

The frame of the electrolytic cell of the invention can be composed of solid, as opposed to hollow or U or channel shaped frame members of metal or plastic. U-shaped or channel shaped members can be suitably formed so as to accommodate insertion of a reinforcing core material within the opening in the frame members. The frame, in one embodiment of the invention, comprises a multiplicity of rectangularly shaped frame members consisting of parallel top and bottom members of predetermined length interconnected by opposing, parallel vertically positioned first and second side members of predetermined length and divided by at least one member parallel to said top and bottom members so as to define at least two rectangularly shaped openings suitable for contacting the periphery of the electrode so as to form multiple cells extending in a vertical, upright position during operation of the cell. The core material of the frame can be formed of a mixture of an electrolyte resistance filler and an electrolyte resistant thermosetting resin such as polyester, a polyether, a phenolic, or an epoxy resin. The core material also must be resistant to electrolysis products. Useful filler materials can be particulate or fibrous and are illustrated by such chemically inert materials as sand, talc, titanium dioxide, chopped glass fibers or a chopped fibrous polyolefin or halocarbon polymer such as polytetrafluoroethylene fibers. The proportion of filler utilized in admixture with the thermosetting resin for the formation of the core material can be from 50 to 95% by weight, preferably from 60 to 85% by weight and most preferably, from 70 to 80% by weight.

The materials of construction for the frame in a chlor-alkali electrolytic cell generally are made of a single metal or metal composite such as titanium, nickel, titanium clad copper or steel or other such metal or suitable material and the portion of the frame in contact with the catholyte will often be of steel, nickel, stainless steel (high chromium or high nickel content) nickel clad steel, nickel clad copper, stainless steel on copper or stainless steel on steel.

When the frame is open on one side, i.e., U-shaped or channel shaped, the frame material, or liner, can also be made of various synthetic organic polymers. For example the liner can be made from a hydrophobic polymer, for example, a polyolefin or a thermoplastic halocarbon polymer. Polytetrafluoroethylene or polypropylene are the most preferred polymers for use in the preparation of the liner but if desired other hydrophobic polymers can be used instead such as a polymer of fluorinated ethylene propylene, polyvinylidene chloride, polyvinyl dichloride, and polyvinyl difluoride. The use of thermoplastic polymers for the formation of the liner portion of the frame allows the use of extruded portions of the liner which can be readily assembled into the rectangular shaped frame and thereafter filled with a mixture of a thermosetting polymer and filler.

The thickness of the frame must be calculated for the specific design of a filter press electrolytic cell. In this respect, the gasket pressure required is perhaps more significant a design factor than hydraulic pressure. In general, the thickness of the liner is in the range from 0.12 to 0.62 cm and preferably from 0.2 to 0.38 cm. Generally, the overall thickness of the frame, including the core material, is in the range of from 2 to 10 cm, preferably from 2.5 to 6 cm and most preferably from 3 to 5 cm.

The openings required in the frame for inlets, outlets, and conductors (not shown) tend to reduce the strength of the frame at the points of passage. Without the use of a metallic or plastic channel filled with a core material as a component of the frame, electrode sections considerably thicker than the size of the frame specified above might be required simply to provide adequate frame strength. Liners formed into channels from sheet materials have advantages over solid constructions in that the flanges of the liner forming the channel are inherently thin and thus the strength of the liner is not reduced appreciably by penetration of the channel for inlets, outlets, and conductors. In addition, the core material which can be formed in place in the channels provide increased strength. The net result can be the use of a thinner electrode and therefore a less expensive cell on a unit basis.

The relative dimensions of the various parts of the frame can be changed to accommodate different electrolytic processes. For instance, different shapes of the frame channels can be used and modifications can be made in the methods of sealing the frames utilizing gasketting material without losing the prime advantages of such a frame, namely a strong filter press type cell frame made of either an electrically conductive metal liner and a thermosetting polymer/filler core material or a cell frame made of an organic polymer liner material each with a thermosetting polymer/filler core material.

The following examples illustrate the various aspects of the invention but are not intended to limit its scope.

### EXAMPLE I

An electrolytic cell was constructed in accordance with the schematic diagram shown in Fig. 2 except that the cell was only one electrode assembly (cell unit) high and contained only a single electrode assembly (cell unit). The cell diaphragm was composed of three layers of a porous material composite available under the trade designation CELGARD® from the Celanese Corporation. Each layer of the cell diaphragm was composed of a 25 »m (micron) thick microporous polyolefin film laminated to a non-woven polypropylene fabric so as to provide a total laminated thickness of 125 »m (microns). Thus, a total cell diaphragm thickness of 375 »m (microns) resulted by the use of three layers of the composite material. The anode was prepared by coating a nickel-plated steel substrate with an electrocatalytic amount of cobalt and tungsten compounds. The cathode was of the packed bed type and was composed of a particulate substrate, namely graphite coated with a mixture of carbon black and polytetrafluoroethylene. The thickness of the packed bed cathode was about 3.75 cm. The cell was used to electrolyze a solution of sodium hydroxide which was stabilized utilizing 0.6% by weight of sodium silicate solution (D=1.396(41 degrees Baumé)) based upon the one molar concentration of sodium hydroxide in the electrolyte.

A nickel sheet current collector was placed upon the back side of the packed bed cathode, the back side of the cathode being that side which faces away from the cell diaphragm. An aqueous concentration of 38.5 grams per liter of sodium hydroxide was utilized as the electrolyte and the cell was connected to a source or electric current so as to provide a current density of 46.5 mA/cm² and a cell voltage of 1.78 volts. Hydrogen peroxide was produced at a concentration of 30.5 grams per liter in an aqueous solution having a sodium hydroxide concentration of 60.3 grams per liter. Hydrogen peroxide was produced at a current efficiency of 92.2%.

### EXAMPLE-II

A similar "control" electrolytic cell was set up and run to evaluate the voltage, product concentration and current efficiency. However, the current collector, instead of being positioned on the backside of the cathode ,as in Example I, was positioned on the front side, facing the cell diaphragm. Under similar operating conditions, at an electrolyte feed concentration of 41.4 grams per litre of sodium hydroxide, and a current density of 46.5 mA/cm², a cell voltage of 1.74 volts was obtained at a current efficiency of 94.6%. The product concentration obtained was 32.7 grams per liter of hydrogen peroxide in an aqueous solution containing 61 grams per liter of sodium hydroxide.

Comparison of the inventive Example I with the control Example II shows there is no voltage penalty in the cell where the position of the current collector is moved from the conventional position on the front side of the cathode to the backside of the cathode. A person skilled in the art would expect a voltage penalty to occur since at 62 mA/cm² and under a pressure of 0.146 kg/cm² gauge a voltage drop is obtained through a packed bed cathode similar to that utilized in the electrolytic cells described in Examples I and II. Where the cathode measures 2.5 cm in thickness, the voltage drop was 0.223 volts per cm. Therefore, since the cathodes utilized in the electrolytic cells of Examples I and II measured 1.25 cm in thickness, a person skilled in the art would expect a voltage penalty of 0.283 volts, or one-half the voltage drop measured through a 2.5 cm thickness of a packed bed cathode similar to that utilized in the electrolytic cells of Examples I and II.

## Claims

1. An electrode assembly exhibiting improved electrolyte flow through a diaphragm thereof with a low voltage penalty when used in an electrochemical cell (5) for reacting an electrolyte with a gas, said assembly comprising a porous self-draining cathode (14) in contact with one planar surface of a current collector (12), a liquid permeable diaphragm (16) positioned in contact with an opposite planar surface of said porous cathode (14), and an anode (20) positioned in a spaced relationship to the diaphragm (16) by an electrically nonconductive spacing means (18), the spacing means (18) being of a dimension sufficient to allow for effective circulation of said electrolyte between said diaphragm (16) and said anode (20), characterized in that said liquid permeable diaphragm (16) comprises (A) a plurality of layers of a microporous polyolefin film, or (B) at least one layer of a composite comprising said microporous polyolefin film and a support fabric resistant to degradation upon exposure to an electrolyte or electrolysis products thereof.

2. The assembly of claim 1, characterized in that said porous cathode (14) comprises a bed of electroconductive, sintered particles or an agglomeration of loose particles.

3. The assembly of claim 1, characterized in that said current collector (12) forms a portion of a bipolar electrode (22) in a bipolar electrochemical cell, and the anode portion (20) of said bipolar electrode (22) comprises the anode of an adjacent electrode assembly of said bipolar electrochemical cell.

4. The assembly of claim 3, characterized in that said bipolar electrode (22) is constructed of an integral sheet or separate sheets selected from a solid metal, a wire mesh, a perforated metal, and an expanded metal mesh, and the anode portion (20) of the bipolar electrode (22) is separated from the diaphragm (16) of said adjacent electrode assembly of said bipolar electrochemical cell by spacing means (18) thereby forming an anolyte compartment (24).

5. The assembly of any one of the preceding claims, characterized by including at least one rectangularly shaped frame (10) comprising parallel top and bottom frame members of predetermined length and divided by at least one frame member parallel to said top and bottom members so as to define a plurality of openings suitable for retaining said electrode assembly in each of said openings extending in a generally vertical direction with respect to said opening.

6. The assembly of any of the preceding claims, wherein said electrolyte is sodium hydroxide, said anode (20) is selected from the group consisting of a dimensionally stable anode, a stainless steel anode an an insoluble electrode prepared by coating an electrically conductive metal substrate with an effective electrocatalytic amount of cobalt and tungsten compounds, and said current collector (12) is selected from a metal mesh or metal sheet.

7. The assembly of claims 5 or 6, characterized by a plurality of said frames (10) extending in a horizontal direction, each of said frames containing a plurality of electrode assemblies extending in a vertical direction.

8. The assembly of any of claims 5 to 7, characterized in, that said frame (10) is constructed of a material selected from a synthetic resinous material, a metal, and a metal-synthetic resinous material composite.

9. An electrochemical cell (5) for reacting an electrolyte with a gas, comprising an electrode assembly exhibiting improved electrolyte flow through a diaphragm thereof with a low voltage penalty, comprising an anode (20), a liquid permeable diaphragm (16), a porous self-draining cathode (14), a cathode current collector (12), and an electrically nonconductive spacing means (18), wherein said current collector (12) is in contact with on planar surface of said porous cathode (14), said diaphragm (16) is in contact with an opposite surface of said porous cathode (14), and wherein said diaphragm (16) is positioned in a spaced relationship with said anode (20) by said spacing means (18), said spacing means (18) being of a dimension sufficient to allow for effective circulation of said electrolyte between said diaphragm (16) and said anode (20), said diaphragm (16) comprising (A) a plurality of layers of a microporous polyolefin film, or (B) at least one layer of a composite comprising said microporous polyolefin film and a support fabric resistant to degradation upon exposure to an electrolyte or electrolysis products thereof.

10. The electrochemical cell of claim 9 characterized by including at least one frame (10) comprising parallel top and bottom frame members of predetermined length divided by at least one frame member parallel to said top and bottom members so as to define a plurality of openings suitable for retaining said electrode assembly in each of said openings and providing a plurality of electrode assemblies extending in a generally vertical direction with respect to said openings.

## Patentansprüche

1. Elektrodenanordnung, die einen verbesserten Elektrolytfluß durch ein Diaphragma davon aufweist mit einem geringen Spannungsabzug, wenn sie in einer elektrochemischen Zelle (5) zum Umsetzen eines Elektrolyten mit einem Gas verwendet wird, wobei die Anordnung umfaßt eine poröse, selbst-trocknende Kathode (14) die in Kontakt mit einer planaren Oberfläche eines Stromkollektors (12) steht, ein Flüssigkeits-permeables Diaphragma (16), das in Kontakt mit einer gegenüberliegenden planaren Oberfläche der porösen Kathode (14) angebracht ist und eine Anode (20), die durch ein elektrisch nicht leitfähiges Abstandhaltemittel (18) in einem Abstand zum Diaphragma (16) angebracht ist, wobei das Abstandhaltemittel (18) eine ausreichende Größe aufweist, um eine wirksame Zirkulation des Elektrolyten zwischen dem Diaphragma (16) und der Anode (20) zu ermöglichen,
dadurch gekennzeichnet,
daß das Flüssigkeits-permeable Diaphragma (16) (A) mehrere Schichten eines mikroporösen Polyolefinfilms oder (B) mindestens eine Schicht eines Verbundstoffs, umfassend den mikroporösen Polyolefinfilm und ein Stützgewebe, das gegenüber Zersetzung bei Kontakt mit einem Elektrolyten oder Elektrolyseprodukten davon beständig ist, umfaßt.

2. Anordnung nach Anspruch 1,
dadurch gekennzeichnet,
daß die poröse Kathode (14) ein Bett elektrisch leitfähiger, gesinterter Teilchen oder eine Agglomeration loser Teilchen umfaßt.

3. Anordnung nach Anspruch 1,
dadurch gekennzeichnet,
daß der Stromkollektor (12) einen Teil einer bipolaren Elektrode (22) in einer bipolaren, elektrochemischen Zelle bildet und daß der Anodenteil (20) der bipolaren Elektrode (22) die Anode einer der bipolaren elektrochemischen Zelle benachbarten Elektrodenanordnung umfaßt.

4. Anordnung nach Anspruch 3,
dadurch gekennzeichnet,
daß die bipolare Elektrode (22) hergestellt ist aus einem Integralblech oder getrennten Blechen, ausgewählt aus einem massiven Metall, einem Drahtgitter, einem durchlöcherten Metall und einem Streckmetallgitter und daß der Anodenteil (20) der bipolaren Elektrode (22) vom Diaphragma (16) der der bipolaren elektrochemischen Zelle benachbarten Elektrodenanordnung durch Abstandhaltemittel (18) abgetrennt ist, wobei ein Anolytraum (24) gebildet wird.

5. Anordnung nach einem der vorhergehenden Ansprüche,
dadurch gekennzeichnet,
daß sie mindestens einen rechtwinklig ausgeformten Rahmen (10) enthält, umfassend parallele obere und untere Rahmenbauteile vorbestimmter Länge und der unterteilt ist durch mindestens ein zu den oberen und unteren Bauteilen paralleles Rahmenbauteil, um so mehrere Öffnungen zu definieren, die geeignet sind, die Elektrodenanordnung in jeder der Öffnungen aufzunehmen, die sich im allgemeinen in einer hinsichtlich der Öffnung vertikalen Richtung erstreckt.

6. Anordnung nach einem der vorhergehenden Ansprüche, wobei der Elektrolyt Natriumhydroxid ist, die Anode (20) ausgewählt ist aus der Gruppe, bestehend aus einer dimensionstabilen Anode, einer Anode aus rostfreiem Stahl und einer unlöslichen Elektrode, hergestellt durch Beschichten eines elektrisch leitfähigen Metallsubstrats mit einer elektrokatalytisch wirksamen Menge von Kobalt- und Wolframverbindungen, und der Stromkollektor (12) ausgewählt ist aus einem Metallgitter oder Metallblech.

7. Anordnung nach Anspruch 5 oder 6,
dadurch gekennzeichnet,
daß sich mehrere der Rahmen (10) in einer horizontalen Richtung erstrecken, wobei jeder der Rahmen mehrere Elektrodenanordnungen, die sich in einer vertikalen Richtung erstrecken, enthält.

8. Anordnung nach einem der Ansprüche 5 bis 7,
dadurch gekennzeichnet,
daß der Rahmen (10) hergestellt ist aus einem Material, ausgewählt aus einem Synthetikharz-Material, einem Metall und einem Verbundstoff aus einem Metall-Synthetikharz-Material.

9. Elektrochemische Zelle (5) zum Umsetzen eines Elektrolyten mit einem Gas, umfassend eine Elektrodenanordnung, die einen verbesserten Elektrolytfluß durch ein Diaphragma davon mit einem geringen Spannungsabzug aufweist, umfassend eine Anode (20), ein Flüssigkeits-permeables Diaphragma (16), eine poröse, selbst-trocknende Kathode (14), einen Kathodenstromkollektor (12) und ein elektrisch nicht leitfähiges Abstandhaltemittel (18), wobei der Stromkollektor (12) in Kontakt mit einer planaren Oberfläche der porösen Kathode (14) steht, das Diaphragma (16) in Kontakt mit einer gegenüberliegenden Oberfläche der porösen Kathode (14) steht, und wobei das Diaphragma (16) durch ein Abstandhaltemittel (18) in einem Abstand zu der Anode (20) angeordnet ist, das Abstandhaltemittel (18) eine ausreichende Größe aufweist, um wirksame Zirkulation des Elektrolyten zwischen dem Diaphragma (16) und der Anode (20) zu ermöglichen, das Diaphragma (16) (A) mehrere Schichten eines mikroporösen Polyolefinfilms oder (B) mindestens eine Schicht eines Verbundstoffes, umfassend den mikroporösen Polyolefinfilm und ein Stützgewebe, das gegenüber Zersetzung bei Kontakt mit einem Elektrolyten oder Elektrolyseprodukten davon, beständig ist, umfaßt.

10. Elektrochemische Zelle nach Anspruch 9,
dadurch gekennzeichnet,
daß sie mindestens einen Rahmen (10) enthält, umfassend parallele obere und untere Rahmenbauteile vorbestimmter Länge, der durch mindestens ein zu den oberen und unteren Bauteilen paralleles Rahmenbauteil unterteilt ist, um so mehrere Öffnungen zu definieren, die geeignet sind die Elektrodenanordnung in jeder der Öffnungen aufzunehmen und mehrere Elektrodenanordnungen bereitzustellen, die sich hinsichtlich der Öffnungen in einer im allgemeinen vertikalen Richtung erstrecken.

## Revendications

1. Assemblage d'électrodes présentant un écoulement d'électrolyte amélioré à travers un diaphragme de celui-ci avec une faible diminution de tension lorsqu'on l'utilise dans une cellule électrochimique (5) pour faire réagir un électrolyte avec un gaz, ledit assemblage comprenant une cathode (14) poreuse, auto-drainante en contact avec une surface plane d'un collecteur (12) de courant, un diaphragme (16) perméable aux liquides placé en contact avec une surface plane opposée à ladite cathode poreuse (14), et une anode poreuse (20) placée en une relation espacée vis-à-vis du diaphragme (16) à l'aide de moyens d'espacement (18) non-conducteurs de l'électricité, les moyens d'espacement (18) étant d'une dimension suffisante pour permettre une circulation efficace dudit électrolyte entre ledit diaphragme (16) et ladite anode (20), caractérisé en ce que ledit diaphragme (16) perméable aux liquides comprend (A) une pluralité de couches d'un film microporeux de polyoléfine, ou (B) au moins une couche d'un composite comprenant ledit film microporeux de polyoléfine et un tissu support résistant à une dégradation par exposition à un électrolyte ou aux produits de l'électrolyse de celui-ci.

2. Assemblage selon la revendication 1, caractérisé en ce que la cathode poreuse (14) comprend un lit de particules frittées conductrices de l'électricité ou une agglomération de particules mobiles.

3. Assemblage selon la revendication 1, caractérisé en ce que ledit collecteur de courant (12) forme une portion d'une électrode bipolaire (22) dans une cellule électrochimique bipolaire, et la portion d'anode (20) de ladite électrode bipolaire (22) comprend l'anode d'un assemblage d'électrodes adjacent de la cellule électrochimique bipolaire.

4. Assemblage selon la revendication 3, caractérisé en ce que ladite électrode bipolaire (22) est construite à partir d'une feuille intégrée ou de feuilles séparées choisies parmi un métal solide, une toile métallique, un métal perforé, et un tamis en métal déployé, et la portion d'anode (20) de l'électrode bipolaire (22) est séparée du diaphragme (16) dudit assemblage d'électrodes adjacent de ladite cellule électrochimique bipolaire à l'aide de moyens d'espacement (18) formant ainsi un compartiment d'anolyte (24).

5. Assemblage selon l'une quelconque des revendications précédentes, caractérisé par l'incorporation d'au moins un cadre de forme rectangulaire (10) comprenant des éléments de cadre parallèles supérieur et inférieur de longueur prédéterminée et divisés par au moins un élément de cadre parallèle auxdits éléments supérieur et inférieur de façon à définir une pluralité d'ouvertures appropriées pour maintenir ledit assemblage d'électrodes dans chacune desdites ouvertures s'étendant dans une direction généralement verticale par rapport à ladite ouverture.

6. Assemblage selon l'une quelconque des revendications précédentes, dans lequel ledit électrolyte est l'hydroxyde de sodium, ladite anode (20) est choisie dans le groupe formé par une anode dimensionnellement stable, une anode en acier inoxydable et une électrode insoluble préparée en revêtant un substrat métallique conducteur de l'électricité avec une quantité électrocatalytique efficace de composés de cobalt et de tungstène, et ledit collecteur de courant (12) est choisi parmi une toile métallique et une feuille de métal.

7. Assemblage selon la revendication 5 ou 6, caractérisé par une pluralité desdits cadres (10) s'étendant dans une direction horizontale, chacun desdits cadres contenant une pluralité d'assemblages d'électrodes s'étendant dans une direction verticale.

8. Assemblage selon l'une quelconque des revendications 5 à 7, caractérisé en ce que ledit cadre (10) est construit en une matière choisie parmi une matière plastique synthétique, un métal, et un composite de matière plastique synthétique-métal.

9. Cellule électrochimique (5) pour faire réagir un électrolyte avec un gaz, comprenant un assemblage d'électrodes présentant un écoulement d'électrolyte amélioré à travers un diaphragme de celui-ci avec une faible diminution de tension, comprenant une anode (20), un diaphragme (16) perméable aux liquides, une cathode (14) poreuse auto-drainante, un collecteur cathodique de courant (12), et des moyens d'espacement (18) non-conducteurs de l'électricité, dans lequel ledit collecteur (12) de courant est en contact sur une surface plane de ladite cathode poreuse (14), ledit diaphragme (16) est en contact avec une surface opposée de ladite cathode poreuse (14), et dans laquelle ledit diaphragme (16) est placé dans une relation espacée avec ladite anode (20) à l'aide des moyens d'espacement (18), lesdits moyens d'espacement (18) étant d'une dimension suffisante pour permettre une circulation efficace dudit électrolyte entre ledit diaphragme (16) et ladite anode (20), ledit diaphragme (16) comprenant (A) une pluralité de couches d'un film microporeux de polyoléfine, ou (B) au moins une couche d'un composite comprenant ledit film microporeux de polyoléfine et un tissu support résistant à une dégradation par exposition à un électrolyte ou aux produits de l'électrolyse de celui-ci.

10. Cellule électrochimique selon la revendication 9, caractérisée par le fait qu'elle comprend au moins un cadre (10) comportant des éléments de cadre parallèles supérieur et inférieur de longueur prédéterminée et divisés par au moins un élément de cadre parallèle auxdits éléments supérieur et inférieur de façon à définir une pluralité d'ouvertures appropriées pour maintenir l'assemblage d'électrodes dans chacune desdites ouvertures et à obtenir une pluralité d'assemblages d'électrodes s'étendant dans une direction généralement verticale par rapport auxdites ouvertures.
